(19) Europäisches Patentamt
European Patent Office
Office européen des brevets

(11) **EP 4 411 864 A1**

(12) **EUROPEAN PATENT APPLICATION**

(43) Date of publication:
**07.08.2024 Bulletin 2024/32**

(21) Application number: **23305141.6**

(22) Date of filing: **03.02.2023**

(51) International Patent Classification (IPC):
**H01M 4/131** (2010.01)      **H01M 4/134** (2010.01)
**H01M 4/38** (2006.01)       **H01M 4/525** (2010.01)
**H01M 4/62** (2006.01)       **H01M 10/052** (2010.01)
**H01M 10/0562** (2010.01)    **H01M 10/0585** (2010.01)

(52) Cooperative Patent Classification (CPC):
**H01M 10/0562; H01M 4/131; H01M 4/134;**
**H01M 4/382; H01M 4/525; H01M 4/62;**
**H01M 10/052; H01M 10/0585;** H01M 2300/0068;
H01M 2300/0071; H01M 2300/008

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **Saint-Gobain Ceramics & Plastics Inc.**
  **Worcester, Massachusetts 01615 (US)**
• **Centre national de la recherche scientifique**
  **75016 Paris (FR)**
• **College de France**
  **75005 Paris (FR)**

• **SORBONNE UNIVERSITE**
  **75006 Paris (FR)**

(72) Inventors:
• **MARCHANDIER, Thomas**
  **93300 Aubervilliers (FR)**
• **OUSPENSKI, Vladimir**
  **93300 Aubervilliers (FR)**
• **TARASCON, Jean-Marie**
  **75005 Paris (FR)**
• **HENNEQUART, Benjamin**
  **75005 Paris (FR)**

(74) Representative: **Saint-Gobain Recherche**
  **Département Propriété Industrielle**
  **39 Quai Lucien Lefranc**
  **93300 Aubervilliers (FR)**

(54) **LOW PRESSURE ALL-SOLID-STATE BATTERY**

(57)     The present invention relates to an all-solid-state-battery (ASSB) comprising successively: an anode comprising lithium in the metallic state, at least one solid electrolyte layer comprising a solid electrolyte material, and a cathode composite comprising a cathode active material and a halide solid electrolyte, wherein the all-solid-state-battery is submitted to a pressure comprised from 0.05 MPa to 30 MPa. The invention further pertains to a process of making said ASSB comprising assembling a cell comprising the ASSB and applying a pressure ranging from 0.05 MPa to 30 MPa, in particular from 0.075 MPa to 20 MPa, preferably from 0.08 MPa to 10 MPa, and even more preferably from 0.1 MPa to 2 MPa onto the assembled cell.

[Fig 1]

EP 4 411 864 A1

**Description**

**Technical field**

The present invention belongs to the field of all-solid-state rechargeable batteries (ASSB) and in particular relates to the optimization of their cycling.

**Technical background**

ASSBs are of particular interest as a substitute to traditional Li-Ion batteries, especially since they raise fewer safety concerns and have higher energy densities, thus higher capacities. By design, ASSBs were supposed to have anodes composed of lithium in the metallic state which would allow their energy density to increase by up to 50% compared to Li-ion batteries.

To obtain an ASSB, a solid electrolyte is used instead of the liquid electrolytes found in Li-Ion batteries. ASSBs also use high energy NMC cathode particles, said particles being incorporated into the solid state electrolyte.

Such solid electrolyte is for example chosen from oxides, sulphides and halides solid electrolytes. Amongst the sulphides solid electrolytes, the following examples are the most common: lithium thiophosphate ($\beta$-$Li_3PS_4$, LPS), argyrodite ($Li_6PS_5Cl$) such as described in H.J. Deiseroth, et al. "LiePSsX: a class of crystalline Li-rich solids with an unusually high Li+ mobility." Angew. Chem. Int. Ed., 47 (2008), pp. 755-758. Finally, halides are usually represented by the formula $Li_3MX_6$ wherein M is a rare earth and X at least one halide, for example $Li_3InCl_6$, such as described in X. Li et al. "Air-stable Li3InCl6 electrolyte with high voltage compatibility for all-solid-state batteries." Energy Environ. Sci., 2019,12, pp. 2665-2667; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

Amongst the above-mentioned solid electrolytes, each presents its advantages and drawbacks.

The oxides, in particular the garnet type LLZO, have a good stability in oxidation and reduction but present relatively low ionic conductivity. The sulphides present relatively high ionic conductivity and are stable towards the anode but suffer from a low stability at high potential and form a toxic gas ($H_2S$) when exposed to humidity. Finally, the halides present a relatively good ionic conductivity and a good stability in oxidation but react at the interface with the negative electrode.

Another feature of ASSBs, is that they require, by their design, to have high pressure applied on them. This pressure is required since, obviously, ASSBs are made of solid materials, and it is needed to maintain good contact between the active material and the solid electrolyte. A usual pressure for ASSBs is about 100 MPa.

However, this high pressure leads to further issues, namely mechanical extrusion of lithium through the solid electrolyte, lithium creep and dendrites formation at the anode.

All of the above-mentioned (electro)chemical stability issues have led so far to replace the lithium metal anode supposed to be present in ASSBs by, for example, graphite, lithium alloys such as LiIn, or even silicon. While these anode materials yield interesting results, they exchange performance for stability. However, the increase in energy density promised with ASSBs will only be possible by stably incorporating a lithium metal anode.

A recent study (Gao et al., "Solid-state lithium battery cathodes operating at low pressure", Joule 6, 636-646, March 16, 2022) demonstrated that, in specific condition, a similar capacity retention to that obtained at higher pressure was possible by reducing the volume expansion of the cathode active material. To achieve this goal, this document teaches to use NMC 811 as a cathode active material, most importantly in a reduced voltage range and at 80 °C, against a LiIn anode and with $Li_3InCl_6$ as a catholyte, while the cell is submitted to a 2 MPa pressure.

However, this document still does not teach how to implement an anode made from lithium in the metallic state in a normal voltage range (up to 4.4 V).

**Summary of the invention**

Technical problem

The invention thus offers to solve the technical problem of providing a high capacity ASSB wherein the anode is made of lithium in the metallic state, which is stable in normal use conditions.

Solution to the technical problem

The inventors surprisingly found that implementing a halide solid electrolyte as the catholyte allowed to obtain ASSBs comprising an anode made of lithium in the metallic state that is stable at low pressure.

Thus, according to a first aspect, the present invention relates to an all-solid-state-battery comprising successively:

- an anode comprising lithium in the metallic state,
- at least one solid electrolyte layer comprising a solid electrolyte material, and
- a cathode composite comprising a cathode active material and a halide solid electrolyte,

wherein the all-solid-state-battery is submitted to a pressure comprised from 0.05 MPa to 30 MPa.

An all-solid-state battery (ASSB) according to the invention allows to provide ASSBs with a high energy capacity and a better retention of their capacity.

According to a second aspect, the present invention also concerns a process of making the all-solid-state-battery according to the preceding invention, comprising the following steps:

- assembling a cell comprising the all-solid-state-battery, and
- applying a pressure ranging from 0.05 MPa to 30 MPa, in particular from 0.075 MPa to 20 MPa, preferably from 0.08 MPa to 10 MPa, and even more preferably from 0.1 MPa to 2 MPa onto the assembled cell.

Advantages of the invention

As demonstrated herein after, the present invention allows to implement a metallic lithium anode in a stable ASSB system at room temperature, in normal use conditions.

As mentioned herein above, an ASSB implementing a metallic lithium anode yields a high energy density.

**Brief description of the drawings**

Figs 1 and 3 represent the electrochemical performances of cells, or all-solid-state batteries, respectively according to the examples 1 and 2 of the invention at C/20 at room temperature, namely the first galvanostatic cycle of the battery.

Fig 2 represents the electrochemical performances of cells, or all-solid-state-batteries according to the comparative examples below at C/20 at room temperature, namely the first galvanostatic cycles of the batteries

Fig 4 is graphical representation of the charge and discharge capacities in milliampere hours per grams (mAh/g) versus cycle number, for the cell of the example 2 of the invention, illustrating the capacity retention of the cell.

**Detailed description of embodiments**

An all-solid-state-battery according to the invention comprises a halide solid electrolyte in its cathode composite.

Without being bound by any theory, the inventors surprisingly discovered that the use of a halide solid electrolyte in a cathode composite of an ASSB allowed to obtain a functional ASSB, retaining its capacity even at low pressures.

Accordingly, an ASSB according to the invention may be submitted to a pressure comprised from 0.075 MPa to 20 MPa, in particular from 0.08 MPa to 10 MPa and preferably from 0.1 MPa to 2 MPa.

An all-solid-state-battery according to the invention also comprises at least one solid electrolyte layer comprising a solid electrolyte material.

In a particular embodiment of the invention, the solid electrolyte material is chosen from oxide solid electrolytes, sulphide solid electrolytes and halide solid electrolytes, in particular chosen from sulphide solid electrolytes and halide solid electrolytes, preferably the solid electrolyte material is a sulphide solid electrolyte.

Said halide solid electrolytes, sulphide solid electrolytes and oxide solid electrolytes are detailed herein after.

Halide solid electrolytes

In an ASSB according to the invention, a halide solid electrolyte is at least comprised in the cathode composite. It may also be comprised as a solid electrolyte material in at least one solid electrolyte layer.

Halide solid electrolytes may be represented by the following chemical formula

$$M_{3-z}(Me^{k+})_f X_{3-z+k*f}$$

wherein

$$-3 \leq z \leq 3,$$

k is the valence of Me and $2 \leq k < 6$, $0 \leq f \leq 1$;

- M comprises an alkali metal element, in particular including Li;

- Me comprises a metal other than an alkali metal, and

- X is a halogen.

In a particular embodiment, f is different from zero.

In a particular embodiment, Me comprises more than one metal element and k may be the average of the total of the valence of each metal element. For example, when Me includes a trivalent element and a tetravalent element in equal molar quantity, k=(3+4)/2=3.5. In particular, k may be 2, 3, 4 or 5.

It is understood that atomic vacancy can be present inside the unit cell of the halide solid electrolyte. In this case, atomic vacancy can be noted in the formula of the solid halide electrolyte as $M_{3-z}(Me^{k+})_{f \bullet y}X_{3-z+k*f}$ wherein • represents atomic vacancy inside the unit cell and y is the number of vacant atomic positions. In a particular embodiment, y can be f*(k-1).

In a particular embodiment, M can include Li, Na, K, Rb, Cs, or any combination thereof. For example, M can include at least one of Li and Na, or a combination thereof. In a further aspect, M can consist of at least one alkali metal element. For example, M can consist essentially of at least one alkali metal element chosen from the group consisting of Li, Na, K, Rb and Cs. In another example, M can consist of Li. In yet another example, M can consist of a combination of Li and at least one of Na, K, Rb and Cs. In still another example, M can consist of Na and at least one of Cs and Rb. In another example, M can consist of at least one of Na and Cs.

In a particular embodiment, Me can include an alkaline earth metal element, a rare earth element, a 3d transition metal, an element chosen from Zr, Ti, Sn, Th, Ge, Ta, Nb, Mo, W, Sb, Te, In Bi, Al, Ga, and any combination thereof. For example, Me can include an alkaline earth metal including Ba, Mg, Ca and Sr, or any combination thereof. In another example, Me can include a rare earth element, in particular Me can consist of at least one rare earth element. The rare earth element may be chosen from Y, Sc, Ce, Gd, Er, La, Yb and their combinations. In a further example, Me can include a 3d transition metal, in particular chosen from Zn, Cu, V and any combination thereof. In still another example, Me can include an element chosen from Zr, Ti, Sn, Th, Ge, Ta, Nb, Mo, W, Sb, Te, In Bi, Al, Ga and any of their combinations.

In a particular embodiment, X can include a halogen, in particular chosen from Cl, Br, I and any combination thereof. In an example, X can include at least one of Cl and Br. Preferably, X can consist of Cl, Br or any combination thereof.

Accordingly, in an embodiment of the present invention, at least the halide solid electrolyte comprised in the cathode composite, is of the formula $M_{3-z}(Me^{k+})_f X_{3-z+k*f}$

wherein $-3 \leq z \leq 3$, $2 \leq k < 6$, $0 \leq f \leq 1$;

- M comprises an alkali metal element, in particular including Li;

- Me comprises a divalent, trivalent, tetravalent, pentavalent or hexavalent metal element or any combination thereof, in particular Me is chosen from:

   i. alkaline earth metals, including Ba, Mg, Ca, Sr,

   ii. rare earth elements such as Y, Sc, Ce, Gd, Er, La, Yb and their combinations,

   iii. a 3d transition metal such as Zn, Cu, V, and

   iv. an element chosen from Zr, Ti, Sn, Th, Ge, Ta, Nb, Mo, W, Sb, Te, In Bi, Al, Ga, and

   v. any combination thereof, and

- X is a halogen, in particular chosen from Cl, Br, I and any combination thereof;

preferably the halide solid electrolyte is $Li_3In(Cl,Br)_6$, and in particular is $Li_3InCl_6$,
optionally, the solid electrolyte material comprised in the solid electrolyte layer is independently chosen from the formula (I), in particular from $Li_3In(Cl,Br)_6$ and preferably is $Li_3InCl_6$.

In a particular embodiment, the halide solid electrolyte can be represented by $Li_{3-z}Me^{k+}X_{3-z+k}$. When z is not 0, the complex metal halide can be non-stoichiometric. When z is 0, the complex metal halide can be stoichiometric. For example, $-0.95 \leq z \leq 0.95$. In another example, Me includes Y, Gd, Yb, In, Sc, Zn, Mg, Ca, Ba, Sn or a combination thereof, and X is Cl, Br or a combination thereof.

In a particular embodiment, the solid halide electrolyte can be represented by $Li_3MeBr_6$. In another particular embodiment, the solid halide electrolyte can be represented by $Li_3MeCl_6$. In these embodiments, Me can consist of at least one of the above-mentioned metal elements, having a valence of 3. Me can include at least one of the above-mentioned metal elements, wherein the average valence of the at least one metal element is 3.

In another particular embodiment, the solid halide electrolyte can consist of Li, Y, and at least one of Cl and Br. For example, the solid halide electrolyte can consist of Li, Y and Cl. In another example, the solid halide electrolyte can consist of Li, Y and Br. In still another example, the solid halide electrolyte can consist of Li, Y, Cl and Br. In a particular example, the solid halide electrolyte can be represented by $Li_{3x}Y_{1-x}Cl_3$ or $Li_{3x}Y_{1-x}Br_3$, wherein $0 < x \leq 0.5$.

In another particular embodiment, the solid halide electrolyte can consist of Li, Gd and at least one of Cl and Br. For example, the solid halide electrolyte can consist of Li, Gd and Cl. In another example, the solid halide electrolyte can consist of Li, Gd and Br. In still another example, the solid halide electrolyte can consist of Li, Gd, Cl and Br. In a particular example, the solid halide electrolyte can be represented by $Li_{3x}Gd_{1-x}Cl_3$ or $Li_{3x}Gd_{1-x}Br_3$, wherein $0.01 \leq x < 1$.

In another particular embodiment, the solid halide electrolyte can consist of Li, In, and at least one of Cl and Br. For example, the solid halide electrolyte can consist of Li, In and Cl. In another example, the solid halide electrolyte can consist of Li, In and Br. In still another example, the solid halide electrolyte can consist of Li, In, Cl and Br. In a particular example, the solid halide electrolyte can be represented by $Li_{3x}In_{1-x}Cl_3$ or $Li_{3x}In_{1-x}Br_3$, wherein $0 \leq x < 0.5$.

The solid halide electrolyte may be chosen from $Li_3InCl_6$, $Li_3InBr_6$, $Li_3YCl_6$, $LisYBre$, $Li_{2.7}Y_{0.7}Zr_{0.3}Cl_6$, $Li_{2.8}Y_{0.8}Sn_{0.2}Cl_6$, $Li_{3.2}Y_{0.8}Zn_{0.2}Cl_6$, $Li_{3.2}Y_{0.8}Mg_{0.2}Cl_6$, $Li_3Y_{1/3}Zr_{1/3}Mg_{1/3}Cl_6$, $Li_3Y_{1/3}Sn_{1/3}Mg_{1/3}Cl_6$, $Li_3Y_{1/3}Zr_{1/3}Zn_{1/3}Cl_6$, $Li_{2.95}Na_{0.05}YBr_6$, $Li_{2.95}K_{0.05}YBr_6$, $Li_{2.95}Cs_{0.05}YBr_6$, $Li_3Y_{0.7}Gd_{0.3}Br_6$, $Li_3Y_{0.8}Yb_{0.2}Br_6$, $Li_3Y_{0.9}La_{0.1}Br_6$, $Li_{2.9}Y_{0.9}Ce_{0.1}Br_6$, $Li_3In_{0.5}Y_{0.5}Cl_6$ or $Li_3Y(Cl,Br)_6$.

## Sulphide solid electrolyte

Sulphide solid electrolytes suitable for the present invention may include, for example, lithium sulphide, silicon sulphide, phosphorous sulphide, boron sulphide or a combination thereof.

In a preferred embodiment of the invention, the solid electrolyte material comprised in the at least one solid electrolyte layer of the ASSB according to the invention is a sulphide solid electrolyte.

Examples of sulphide solid electrolytes may include at least one of $Li_2S-P_2S_5$, $Li_2S-P_2S_5-LiX$ (where X is a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n each are a positive number, Z represents any of Ge, Zn, and Ga), $Li_2S-GeS_2$, $Li_2S-SiS_2-Li_3PO_4$, $Li_2S-SiS_2-Li_pMO_q$ (where p and q each are a positive number, M represents at least one of P, Si, Ge, B, Al, Ga, or In).

The sulphide solid electrolyte may also be an argyrodite of the general formula $Li_{7-x}PS_{6-x}X_x$ (where $0 \leq x \leq 2$ and X is a halogen element). Preferably, the sulphide solid electrolyte is the argyrodite of formula $Li_6PS_5Cl$.

The sulphide solid electrolyte may also be a thiophosphate such as a thio-LISICON, for example chosen from $(Li)_{4-x}Ge_{1-x}P_xS_4$, wherein x ranges from 0 to 1, $Li_7P_2S_8I$ and $Li_2S-P_2S_5$.

For example, the sulphide solid electrolyte may include $Li_2S$ and $P_2S_5$. When a sulphide-based solid electrolyte material constituting the sulphide-based solid electrolyte includes $Li_2S-P_2S_5$, a molar ratio of $Li_2S$ and $P_2S_5$ may, for example, range from 50:50 to 90:10.

Accordingly, in an embodiment of the present invention, the solid electrolyte material may be a sulphide solid electrolyte, in particular chosen from the group consisting of thiophosphates and argyrodites of the formula $Li_{7-x}PS_{6-x}X_x$ wherein $0 \leq x \leq 2$ and X is a halide, notably chosen from Cl, Br and I, and preferably the sulphide solid electrolyte is chosen from argyrodites and even more preferably is $Li_6PS_5Cl$.

## Oxide solid electrolytes

Lithium oxide solid electrolytes, or simply oxide solid electrolytes, suitable for the present invention may include, for example, NASICON, perovskites, LISICON, garnets or a combination thereof.

In a particular embodiment of the invention, the solid electrolyte material comprised in the at least one solid electrolyte layer of the ASSB according to the invention is an oxide solid electrolyte.

Accordingly, in an embodiment of the present invention, the solid electrolyte material may be an oxide solid electrolyte, in particular chosen from the group consisting of a NASICON such as $LiTi_2(PO_4)_3$; a perovskite such as $(LaLi)TiO_3$; a LISICON such as $Li_{14}ZnGe_4O_{16}$, $Li_4SiO_4$ or $LiGeO_4$; a garnet such as $Li_7La_3Zr_2O_{12}$, preferably the oxide solid electrolyte is a garnet, and even more preferably the oxide solid electrolyte is $Li_7La_3Zr_2O_{12}$.

Anode

In an all-solid-state battery according to the invention, the anode comprises lithium in the metallic state.

Accordingly, the anode of an ASSB according to the invention may be a doped and/or surface-treated lithium metal anode.

Preferably, in the all-solid-state-battery according to the invention, the anode consists in lithium in the metallic state.

The thickness of the anode in an ASSB or an assembly according to the invention may range from 10 $\mu$m to 500 $\mu$m.

A buffer layer may be deposited on the anode of an ASSB according to the invention. In particular, said buffer layer may comprises, preferably consists in, a buffer material chosen from a lithium phosphate such as $Li_3PO_4$ or lithium phosphorus oxynitrides; a NASICON such as $LiTi_2(PO_4)_3$; a perovskite such as $(LaLi)TiO_3$; a LISICON such as $Li_{14}ZnGe_4O_{16}$, $Li_4SiO_4$ or $LiGeO_4$; a garnet such as $Li_7La_3Zr_2O_{12}$; preferably the buffer layer comprises, in particular consists in, $Li_3PO_4$.

Cathode

In an all-solid-state battery according to the invention, the cathode composite comprises a cathode active material and a halide solid electrolyte as described herein above. In particular, the cathode may comprise particles comprising, preferably consisting in, the halide solid electrolyte.

The cathode active material is a material capable of storing and releasing metal ions, in particular alkali metal ions such as Li or Na ions.

As cathode active materials transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not may be used. In particular, the cathode active material may be a transition metal oxide such as a lithium-cobalt oxide, a lithium-nickel-cobalt-aluminium oxide or a lithium-nickel-manganese-cobalt-oxide. Transition metal oxides suitable for use as a cathode active material may be, for example, $LiNi_{0.6}Mn_{0.2}Co_{0.2}O_2$, $Li(NiCoAl)O_2$ and $LiCoO_2$. Preferably, the cathode active material is the transition metal oxide of the formula $LiNi_{0.6}Mn_{0.2}Co_{0.2}O_2$.

The cathode active material may be present in an ASSB according to the invention, in the form of particles. The median diameter of the anode active material particles may range from 0.1 $\mu$m to 100 $\mu$m. Preferably, the median diameter of the anode active material particles is larger than the median diameter of the halide solid electrolyte particles.

The cathode composite may comprise

- from 55 to 75 % wt., in particular from 60 to 70 % wt., and preferably 66.5 % wt. of cathode active material,

- from 20 to 40 % wt., in particular from 25 to 30 % wt., and preferably 28.5 % wt. of halide solid electrolyte, and optionally

- from 1 to 10 % wt., in particular from 2 to 7 % wt., and preferably 5 % wt. of an electron conducting carbon compound.

The thickness of the cathode in an ASSB according to the invention may range from 10 $\mu$m to 500 $\mu$m.

A buffer layer may be deposited on the cathode of an ASSB according to the invention. In particular, the buffer layer deposited on the cathode assembly according to the invention comprises, preferably consists in, a buffer material chosen from a lithium phosphate such as $Li_3PO_4$ or lithium phosphorus oxynitrides; lithium nitride; a NASICON such as $LiTi_2(PO_4)_3$; a perovskite such as $(LaLi)TiO_3$; a LISICON such as $Li_{14}ZnGe_4O_{16}$, $Li_4SiO_4$ or $LiGeO_4$; and a garnet such as $Li_7La_3Zr_2O_{12}$; preferably the buffer layer comprises, in particular consists in, $Li_3PO_4$.

The cathode composite may comprise an electron conductor compound chosen from natural or artificial graphite, graphene, carbon nano-tubes, acetylene black, Ketjen black, activated carbon, carbon fluoride, metal powders, conductive whiskers, conductive metal oxides, conductive polymers, metal fibres or carbon fibres, preferably the electron conductor is vapour grown carbon fibres.

Buffer layer

An ASSB according to the invention may comprise at least one buffer layer, preferably one or two buffer layer(s). Said buffer layer(s) may be in contact with a surface of the solid electrolyte material. When an ASSB according to the invention comprises two buffer layers, these layers are in contact with two opposing faces of the solid electrolyte layer.

Said buffer layer, or separation layer, is intended to prevent a direct electrochemical or chemical reaction between two components of an ASSB according to the present invention. Accordingly, the buffer layer can prevent such reactions between: the sulphide and the halide solid electrolytes, the halide solid electrolyte and the anode and/or the sulphide solid electrolyte and the cathode.

In order to fulfil this requirement, the buffer layer needs to have a good electrochemical stability both towards lithium metal anodes and solid electrolytes, in particular halide solid electrolytes, sulphide solid electrolytes and lithium oxide solid electrolytes.

Thus, the buffer layer may comprise an oxide-based or fluoride-based compound which is chemically inert for halide, sulphide and/or lithium oxide solid electrolytes.

In a particular embodiment of the invention, the buffer layer comprises a metal oxide such as $Al_2O_3$, ZnO, $ZrO_2$, $TiO_2$, preferably, the buffer layer comprises $Al_2O_3$.

In another embodiment of the invention, the buffer layer comprises an ionic conductor chosen from a lithium phosphate such as $Li_3PO_4$ or lithium phosphorus oxynitrides; lithium nitride; a NASICON such as $LiTi_2(PO_4)_3$; a perovskite such as (LaLi)$TiO_3$; a LISICON such as $Li_{14}ZnGe_4O_{16}$, $Li_4SiO_4$ or $LiGeO_4$; a garnet such as $Li_7La_3Zr_2O_{12}$; and $LiAlO_2$.

Accordingly, an ASSB according to the invention may comprise at least one buffer layer, preferably one or two buffer layer(s), in contact with a surface of the solid electrolyte material, said buffer layer may comprise, in particular consists, in a buffer material chosen from a lithium phosphate such as $Li_3PO_4$ or lithium phosphorus oxynitrides; lithium nitride; a NASICON such as $LiTi_2(PO_4)_3$; a perovskite such as (LaLi)$TiO_3$; a LISICON such as $Li_{14}ZnGe_4O_{16}$, $Li_4SiO_4$ or $LiGeO_4$; a garnet such as $Li_7La_3Zr_2O_{12}$; and $Al_2O_3$, more particularly the buffer layer comprises, in particular consists in, $Li_3PO_4$ or $Al_2O_3$; preferably, the buffer layer comprises, in particular consists in, $Li_3PO_4$.

$Li_3PO_4$ is preferred as a buffer material due to its good compatibility with both sulphide and halide solid electrolytes and acceptable ionic conductivity of Li+.

Furthermore, while the ionic conductivity of the buffer layer may be acceptable, it is still lower than the one of either a sulphide or halide solid electrolyte.

However, limiting the thickness of the buffer layer to less than 10 nm allows to still prevent reactions as mentioned herein above, while also mitigating the limiting aspect of the ionic conductivity of the buffer layer.

In other words, a buffer layer that is at least 10 nm thick yields an ASSB with poorer electrochemical properties.

On the other hand, a buffer layer that is finer than 0.5 nm does not sufficiently prevent the herein mentioned reactions between two components of an ASSB.

Accordingly, in an ASSB according to the invention, the buffer layer may have a thickness ranging from 0.5 to less than 10 nm, in particular from 0.75 to 5 nm, and preferably from 1 to 2 nm.

In order to meet the thickness requirement for a buffer layer in an ASSB according to the present invention, the buffer layer may be deposited onto a surface by a vapor deposition based method.

Such vapor deposition based methods are for example, Physical Vapor Deposition (PVD) and Chemical Vapor Deposition (CVD).

The buffer layer may also be deposited by Atomic Layer Deposition (ALD). ALD allows a particularly fine tuning of the thickness of the buffer layer.

The buffer layer may be deposited onto a powder substrate or onto a densified substrate.

Accordingly, the powder substrate may be a component of an ASSB according to the invention before its densification. Hence, the powder substrate may be the solid electrolyte, the anode and/or the cathode composite.

When the buffer material is deposited onto a powder substrate, a coated powder substrate is obtained. Once said coated powder substrate is densified, the buffer material constitutes a buffer layer on at least one surface of the obtained densified material.

In order to provide lithium in the buffer layer, for example when the buffer layer is $Li_3PO_4$, a precursor of the formula LiOR wherein R is a $C_1$-$C_6$ alkyl may be used as a precursor, preferably lithium tert-butoxide is used as a precursor to provide lithium.

In order to provide phosphate in the buffer layer, for example when the buffer layer is $Li_3PO_4$, a precursor of the formula $OP(OR)_3$ wherein R is a $C_1$-$C_3$ alkyl may be used as a precursor, preferably $OP(OCH_3)_3$ is used as a precursor.

In order to provide aluminium in the buffer layer, for example when the buffer layer is $Al_2O_3$, a precursor of the formula $AlR_3$ wherein R is a $C_1$-$C_3$ alkyl may be used as a precursor, preferably $Al(CH_3)_3$ is used as a precursor.

In order to provide oxygen in the buffer layer, for example when the buffer layer is $Al_2O_3$, ozone may be used as a precursor.

In a particular embodiment of the invention, the buffer layer is deposited by Atomic Layer Deposition and the Atomic Layer Deposition reactor is set at a temperature:

- ranging from 85 °C to 185 °C, in particular from 100 °C to 170 °C, and preferably at 150 °C, or

- ranging from 200 °C to 400 °C, in particular from 250 °C to 350 °C, and preferably at 300 °C.

Preparation process

The present invention further relates to a process of making the all-solid-state-battery according to the invention, comprising the following steps:

- assembling a cell comprising the all-solid-state-battery, and
- applying a pressure ranging from 0.05 MPa to 30 MPa, in particular from 0.075 MPa to 20 MPa, preferably from 0.08 MPa to 10 MPa, and even more preferably from 0.1 MPa to 2 MPa onto the assembled cell.

In a particular embodiment of the invention, said pressure is applied and then a constant volume is maintained for the battery cell.

In other words, the process of the invention may comprise a further step of maintaining the volume of the all-solid-state-battery, in particular while said ASSB is cycling.

In another embodiment of the invention, said pressure is applied and maintained regardless of the volume of the battery cell.

In other words, the process of the invention may comprise a further step of maintaining the pressure applied of the all-solid-state-battery, in particular while said ASSB is cycling.

The pressure evolution within the cell may be monitored by positioning the cell in a frame equipped with:

- a mean for applying a pressure, such as a screw, for example at the top of the cell, and

- a force sensor at the opposite end of the cell, for example at the bottom.

The force sensor measures a data representing the pressure applied to the cell by the mean for applying a pressure.

A control unit may be provided which is configured for determining the applied pressure according to the force measured from the force sensor and for controlling the mean for applying a pressure. Said control unit is configured to control the mean for applying a pressure in function of the measured data representing the pressure applied to the cell. Said control unit is for example configured to memorize a predetermined data representing a predetermined pressure. Said control unit may be configured to compare said predetermined memorized data with the data representing the pressure applied to the cell. The control unit may memorize a command law of the mean for applying a pressure comprising the comparison of the predetermined data with the data representing the pressure applied to the cell. When both data are different, said control unit is configured to control the mean for applying a pressure to adjust the pressure applied to the cell.

The electrodes and electrolytes of an ASSB according to the invention are prepared according to processes known by the person skilled in the art and illustrated in the examples below.

**Examples**

Example 1 according to the invention

Synthesis of Solid Sulphide Electrolyte

$Li_6PS_5Cl$ was synthesized by the annealing of stoichiometric mixture of $Li_2S$, $P_2S_5$, and LiCl in an $Al_2O_3$ crucible.

The powder mixture was placed in the crucible and sealed under vacuum in a quartz tube, and finally annealed at 550 °C at a heating rate of 5 °C/min for 72 hours followed by natural cooling to room temperature.

A $Li_6PS_5Cl$ solid electrolyte pellet was obtained.

Synthesis of Solid Halide Electrolyte

$Li_3InCl_6$ was prepared by dissolution of $InCl_3$ and LiCl in distilled water. The precursors were left stirring overnight continuously at room temperature and the obtained clear solution was naturally dried at 100 °C.

A white powder was obtained and subsequently dried firstly at 100 °C for 24 hours and then at 200 °C for 24 hours under dynamic vacuum (P < 1 mbar) followed by natural cooling to room temperature.

Synthesis of the Cathode Composite

A cathode composite was prepared by hand-ground mixture of $LiNi_{0.6}Mn_{0.2}Co_{0.2}O_2$(NMC622):$Li_3InCl_6$:VGCF (66.5:28.5:5 in weight ratio).

Battery assembly

The battery assembly was carried out in a cell consisting of a cylindrical polyetherimide (PEI) cell body and two stainless steel pistons of 8 mm diameter.

The assembling procedure was carried out under argon atmosphere in a glove box ($[O_2]$ < 1 ppm, $[H_2O]$ < 1 ppm).

The two-electrode cell was assembled as follows.

35 mg of $Li_3InCl_6$ were spread and cold pressed at 100 MPa, then 15 mg of $Li_6PS_5Cl$ were formed on the anode side in the same conditions.

6 to 7 mg/cm$^2$ of cathode composite (NMC622/$Li_3InCl_6$/VGCF) was spread on the $Li_3InCl_6$ surface at the cathode side and the whole stack was further densified at 400 MPa for 15 minutes.

After the densification, an 80 to 100 $\mu$m thick metallic Li disk was placed on the anode side and a pressure of 1 MPa was applied on the fully assembled cell for electrochemical studies.

Example 2 according to the invention

The same procedure than for example 1 according to the invention was followed but a pressure of 9 MPa was applied on the fully assembled cell for the electrochemical studies.

**Comparative Examples**

Synthesis of Solid Sulphide Electrolyte

Comparative example 1: Catholyte comprising an argyrodite obtained by ceramic route

$Li_6PS_5Cl$ was synthesized accordingly to the Example 1 according to the invention.

The battery obtained with this compound is herein after referenced as "(SS)$Li_6PS_5Cl$".

Comparative example 2: Catholyte comprising an argyrodite obtained by mechanosynthesis route

$Li_6PS_5Cl$ was obtained by first homogenising stoichiometric amounts of $Li_2S$, $P_2S_5$ and LiCl in a mortar. Then, 1 g of the resulting powder was transferred to a 45 mL zirconia jar with 12 zirconia balls of 10 mm in diameter and was grinded at 600 rpm for 14 h in a Fritsch P7 Pulverisette.

The cell obtained with this compound is herein after referenced as "(BM)$Li_6PS_5Cl$".

Comparative example 3: Catholyte comprising a commercial argyrodite

$Li_6PS_5Cl$ with a particle size of 1 $\mu$m, sold under the reference Fine LPSCI, was purchased from NEI Corporation.

The battery obtained with this compound is herein after referenced as "(NEI)$Li_6PS_5Cl$".

Comparative example 4: Catholyte comprising an argyrodite obtained by ceramic route and grinded

$Li_6PS_5Cl$ was prepared from 140 mg of $Li_6PS_5Cl$ obtained according to the comparative example 1, wet ground in 1.5 mL of xylene for 30 min using a SPEX apparatus and 1 stainless steel ball of 10 mm in diameter.

The battery obtained with this compound is herein after referenced as "(SS-BM)$Li_6PS_5Cl$".

Batteries assembly

The batteries assembly was carried out in cells consisting of a cylindrical polyetherimide (PEI) cell body and two stainless steel pistons of 8 mm diameter.

The assembling procedure was carried out under argon atmosphere in a glove box ($[O_2]$ < 1 ppm, $[H_2O]$ < 1 ppm).

The two-electrode cells were assembled as follows.

50 mg of $Li_6PS_5Cl$ from the comparative example 1, 2, 3 or 4 were spread and cold pressed at 100 MPa.

6 to 7 $mg/cm^2$ of cathode composite (NMC622/ $Li_6PS_5Cl$/VGCF) was spread on the $Li_6PS_5Cl$ surface at the cathode side, next a mixture of $Li_{0.5}In$ and $Li_6PS_5Cl$ (in a 60:40 weight ratio) was added on the $Li_6PS_5Cl$ at the anode side. Finally, the whole stack was further densified at 400 MPa for 15 minutes.

After the densification, a pressure of 9 MPa was applied on the fully assembled cell for electrochemical studies.

**Electrochemical testing**

For all of the examples, the electrochemical testing were carried out in a cell consisting of a cylindrical polyetherimide (PEI) cell body and two stainless steel pistons of 8 mm diameter.

All the electrochemical cycling procedures were carried out under argon atmosphere in a glove box ($[O_2] < 1$ ppm, $[H_2O] < 1$ ppm) at room temperature unless specified otherwise.

Galvanostatic cycling

Galvanostatic cycling studies were carried out at room temperature at C/20 (C correspond to 1 mole of Li exchanged between the two electrodes of the battery per mole of active material in 1 h) in the voltage range of 2.7-4.2 V versus $Li/Li^+$ (also referenced as $Li^0/Li^+$) for the examples according to the invention and in the voltage range of 2.1-3.6 V versus LiIn/In for the comparative examples, the voltage difference between $Li^0/Li^+$ and LiIn/Li being 0.6 V the two voltage range are in fact equivalentAll electrochemical measurements were conducted with a VMP3 potentiostat/galvanostat (BioLogic) controlled with EC-Lab software.

The pressure evolution within the cells during the galvanostatic cycling was controlled and monitored by positioning the cell in a stainless steel frame equipped with a screw on top and a force sensor at the bottom.

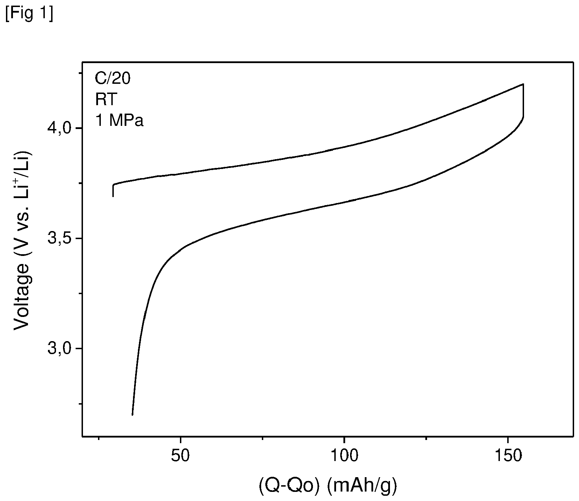

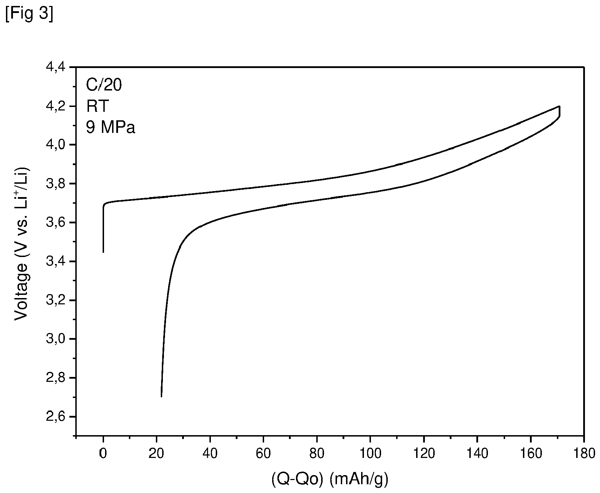

Figs. 1 and 3 depict the cycling performances of the cell stack of the examples, respectively 1 and 2, according to the invention, between 2.7 and 4.2 V vs. $Li^+/Li$, in particular the first cycle curve. This figure demonstrates low irreversible capacity and low polarization after the initial cycle.

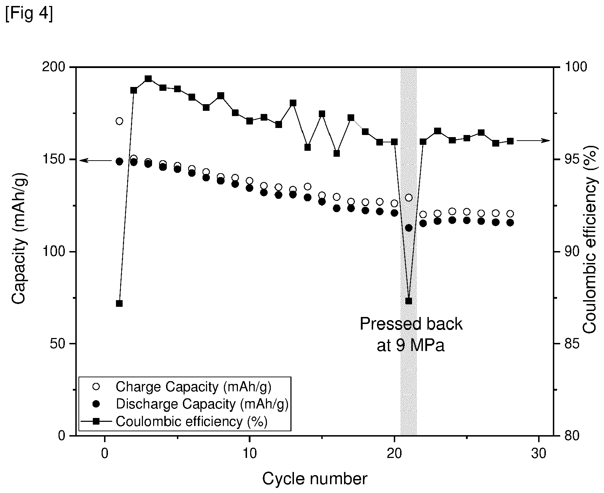

Fig. 4 further illustrates the cycling performances of the cell stack of the example 2 according to the invention, in the same conditions. This figure demonstrates a stable capacity retention over cycling of an ASSB according to the invention.

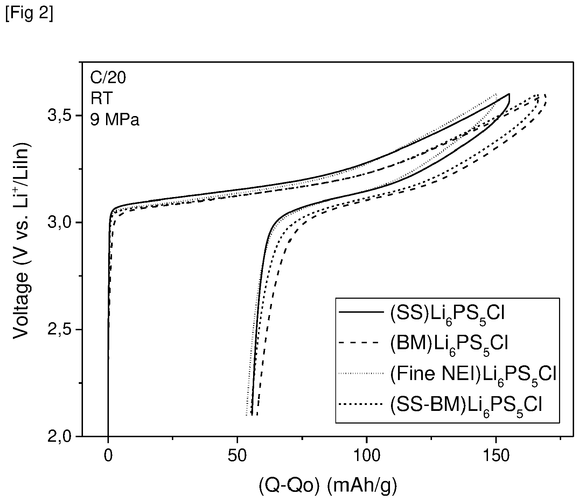

By comparison, Fig 2. depicts the cycling performance of the cell stacks of the comparative examples, between 2.1 and 3.6 V vs. LiIn/In (corresponding to 2.7-4.2 V vs. $Li^+/Li$), in particular the first cycle curve. This figure demonstrates an important irreversible capacity (> 50 mAh/g) after the initial cycle for each of the tested sulphide solid electrolytes incorporated in the cathode of the batteries.

Therefore, the examples detailed herein above demonstrate that an ASSB according to the invention, i.e. wherein the cathode comprises a halide solid electrolyte and the anode comprises lithium in the metallic state, can operate at low pressure (9 MPa), and even at very low pressure (1 MPa), without the expected drawbacks of ASSBs implementing such an anode such as mechanical extrusion of lithium through the solid electrolyte, lithium creep and dendrites formation at the anode. These drawbacks are alleviated while still obtaining an ASSB with a stable capacity over its lifespan.

**Claims**

1. An all-solid-state-battery comprising successively:

    - an anode comprising lithium in the metallic state,
    - at least one solid electrolyte layer comprising a solid electrolyte material, and
    - a cathode composite comprising a cathode active material and a halide solid electrolyte,

    wherein the all-solid-state-battery is submitted to a pressure comprised from 0.05 MPa to 30 MPa.

2. The all-solid-state-battery according to the preceding claim, wherein the pressure is comprised from 0.075 MPa to 20 MPa, in particular from 0.08 MPa to 10 MPa and preferably from 0.1 MPa to 2 MPa.

3. The all-solid-state-battery according to any of the preceding claims, wherein the solid electrolyte material is chosen from oxide solid electrolytes, sulphide solid electrolytes and halide solid electrolytes, in particular chosen from sulphide solid electrolytes and halide solid electrolytes, preferably the solid electrolyte material is a sulphide solid electrolyte.

4. The all-solid-state-battery according to any of the preceding claims, wherein the anode consists in lithium in the metallic state.

5. The all-solid-state-battery according to any of the preceding claims, wherein the cathode active material is chosen from transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not, in particular the cathode active material is a transition metal oxide such as a lithium-cobalt oxide, a lithium-nickel-cobalt-aluminium oxide or a lithium-nickel-manganese-cobalt-oxide, preferably of the formula $LiNi_{0.6}Mn_{0.2}Co_2O_2$.

6. The all-solid-state-battery according to any of the preceding claims, wherein the cathode composite comprises:

   - from 55 to 75 % wt., in particular from 60 to 70 % wt., and preferably 66.5 % wt. of cathode active material,
   - from 20 to 40 % wt., in particular from 25 to 30 % wt., and preferably 28.5 % wt. of halide solid electrolyte, and optionally
   - from 1 to 10% wt., in particular from 2 to 7 % wt., and preferably 5 % wt. of an electron conducting carbon compound.

7. The all-solid-state-battery according to any of the preceding claims, wherein the cathode composite comprises an electron conductor compound chosen from metal powders, conductive whiskers, conductive metal oxides, conductive polymers, metal fibres or electron conducting carbon compound such as natural or artificial graphite, graphene, carbon nano-tubes, acetylene black, Ketjen black, activated carbon, carbon fluoride and carbon fibres, preferably the electron conductor is vapour grown carbon fibres.

8. The all-solid-state-battery according to any of the preceding claims, wherein at least the halide solid electrolyte comprised in the cathode composite is of the formula (I)

$$M_{3-z}(Me^{k+})_f X_{3-z+k^*f} \qquad (I)$$

wherein $-3 \leq z \leq 3$, $2 \leq k < 6$, $0 \leq f \leq 1$;

   - M comprises an alkali metal element, in particular including Li;
   - Me comprises a divalent, trivalent, tetravalent, pentavalent or hexavalent metal element or any combination thereof, in particular Me is chosen from:

      i. alkaline earth metals, including Ba, Mg, Ca, Sr,
      ii. rare earth elements such as Y, Sc, Ce, Gd, Er, La, Yb and their combinations,
      iii. a 3d transition metal such as Zn, Cu, V, and
      iv. an element chosen from Zr, Ti, Sn, Th, Ge, Ta, Nb, Mo, W, Sb, Te, In Bi, Al, Ga, and
      v. any combination thereof, and

   - X is a halogen, in particular chosen from Cl, Br, I and any combination thereof;

      in particular the halide solid electrolyte is $Li_3In(Cl,Br)_6$, and in particular is $Li_3InCl_6$,
      optionally, the solid electrolyte material comprised in the solid electrolyte layer is independently chosen from the formula (I), in particular from $Li_3In(Cl,Br)_6$ and preferably is $Li_3InCl_6$.

9. The all-solid-state-battery according to any of the preceding claims, wherein the solid electrolyte material is a sulphide solid electrolyte, in particular chosen from the group consisting of thiophosphates and argyrodites of the formula $Li_{7-x}PS_{6-x}X_x$ wherein $0 \leq x \leq 2$ and X is a halide, notably chosen from Cl, Br and I, and preferably the sulphide solid electrolyte is chosen from argyrodites and even more preferably is $Li_6PS_5Cl$.

10. The all-solid-state-battery according to any of the preceding claims, wherein the solid electrolyte material is an oxide solid electrolyte, in particular chosen from the group consisting of a NASICON such as $LiTi_2(PO_4)_3$; a perovskite such as $(LaLi)TiO_3$; a LISICON such as $Li_{14}ZnGe_4O_{16}$, $Li_4SiO_4$ or $LiGeO_4$; a garnet such as $Li_7La_3Zr_2O_{12}$, preferably the oxide solid electrolyte is a garnet, and even more preferably the oxide solid electrolyte is $Li_7La_3Zr_2O_{12}$.

11. The all-solid-state-battery according to any of the preceding claims, comprising at least one buffer layer, preferably one or two buffer layer(s), in contact with a surface of the solid electrolyte material wherein the buffer layer comprises, in particular consists in, a buffer material chosen from a lithium phosphate such as $Li_3PO_4$ or lithium phosphorus oxynitrides; lithium nitride; a NASICON such as $LiTi_2(PO_4)_3$; a perovskite such as $(LaLi)TiO_3$; a LISICON such as $Li_{14}ZnGe_4O_{16}$, $Li_4SiO_4$ or $LiGeO_4$; a garnet such as $Li_7La_3Zr_2O_{12}$; and $Al_2O_3$, more particularly the buffer layer comprises, in particular consists in, $Li_3PO_4$ or $Al_2O_3$; preferably, the buffer layer comprises, in particular consists in, $Li_3PO_4$.

12. The all-solid-state-battery according to the preceding claim, wherein the buffer layer has a thickness ranging from 0.5 nm to less than 10 nm, in particular from 0.75 to 5 nm, and preferably from 1 to 2 nm.

13. A process of making the all-solid-state-battery according to any of the preceding claims, comprising the following steps:

   - assembling a cell comprising the all-solid-state-battery, and
   - applying a pressure ranging from 0.05 MPa to 30 MPa, in particular from 0.075 MPa to 20 MPa, preferably from 0.08 MPa to 10 MPa, and even more preferably from 0.1 MPa to 2 MPa onto the assembled cell.

[Fig 1]

[Fig 2]

[Fig 3]

[Fig 4]

Europäisches
Patentamt

European
Patent Office

Office européen
des brevets

# EUROPEAN SEARCH REPORT

Application Number

EP 23 30 5141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/224505 A1 (PANASONIC IP MAN CO LTD [JP]) 27 October 2022 (2022-10-27) | 1-9, 11-13 | INV.<br>H01M4/131 |
| Y | * paragraphs [0224] - [0226], [0242] * | 10 | H01M4/134<br>H01M4/38 |
| A | US 2022/393228 A1 (KUSHIMA AKIHIRO [US] ET AL) 8 December 2022 (2022-12-08) <br> * paragraphs [0042], [0043], [0050]; claims 2, 5 * | 1-13 | H01M4/525<br>H01M4/62<br>H01M10/052<br>H01M10/0562<br>H01M10/0585 |
| A | SU JIN ET AL: "Interfacial modification between argyrodite-type solid-state electrolytes and Li metal anodes using LiPON interlayers", ENERGY & ENVIRONMENTAL SCIENCE, vol. 15, no. 9, 3 August 2022 (2022-08-03) , pages 3805-3814, XP093059248, Cambridge ISSN: 1754-5692, DOI: 10.1039/D2EE01390H <br> * abstract * | 1-13 | |
| Y | US 2022/336846 A1 (XIAO XINGCHENG [US] ET AL) 20 October 2022 (2022-10-20) <br> * paragraphs [0059], [0060], [0066], [0085] * <br> * claims 11, 12, 14 * | 10 | TECHNICAL FIELDS SEARCHED (IPC)<br><br>H01M |

The present search report has been drawn up for all claims

| Place of search | Date of completion of the search | Examiner |
|---|---|---|
| Munich | 29 June 2023 | Gregori, Giuliano |

EPO FORM 1503 03.82 (P04C01)

## ANNEX TO THE EUROPEAN SEARCH REPORT
## ON EUROPEAN PATENT APPLICATION NO.

EP 23 30 5141

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2023

| Patent document cited in search report | | | Publication date | Patent family member(s) | | | Publication date |
|---|---|---|---|---|---|---|---|
| WO 2022224505 | A1 | | 27-10-2022 | NONE | | | |
| US 2022393228 | A1 | | 08-12-2022 | CN | 115020644 | A | 06-09-2022 |
| | | | | JP | 2022136024 | A | 15-09-2022 |
| | | | | US | 2022393228 | A1 | 08-12-2022 |
| US 2022336846 | A1 | | 20-10-2022 | CN | 115207453 | A | 18-10-2022 |
| | | | | DE | 102022105207 | A1 | 20-10-2022 |
| | | | | US | 2022336846 | A1 | 20-10-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.J. DEISEROTH et al.** LiePSsX: a class of crystalline Li-rich solids with an unusually high Li+ mobility. *Angew. Chem. Int. Ed.,* 2008, vol. 47, 755-758
- **X. LI et al.** Air-stable Li3InCl6 electrolyte with high voltage compatibility for all-solid-state batteries. *Energy Environ. Sci.,* 2019, vol. 12, 2665-2667
- **SCHMIDT, M. O. et al.** Zur Kristallstruktur von Li3InCl6. *Zeitschrift für Anorg. und Allg. Chemie,* 1999, vol. 625 (4), 539-540
- **G.MEYER et al.** Handbook on the Physics & Chemistry of Rare Earths. Elsevier Sci, 2000, vol. 28
- **GAO et al.** Solid-state lithium battery cathodes operating at low pressure. *Joule,* 16 March 2022, vol. 6, 636-646